# EUROPEAN PATENT SPECIFICATION

(11) **EP 3 047 956 B1**
(45) Date of publication and mention of the grant of the patent: **07.03.2018**
(21) Application number: 16151854.3
(22) Date of filing: 19.01.2016
(51) Int. Cl.: B29C 45/76, B29C 45/82, B29C 45/80

(54) **INJECTION MOLDING MACHINE AND INJECTION MOLDING METHOD**
SPRITZGIESSMASCHINE UND SPRITZGIESSVERFAHREN
MACHINE DE MOULAGE PAR INJECTION ET PROCÉDÉ DE MOULAGE PAR INJECTION

(30) Priority: 23.01.2015 JP 2015011700
(43) Date of publication of application: 27.07.2016
(73) Proprietor: SUMITOMO HEAVY INDUSTRIES, LTD., Tokyo 141-6025 (JP)
(72) Inventor: YAMAGUCHI, Hiroshi, Chiba-shi Chiba 263-0001 (JP)
(74) Representative: Louis Pöhlau Lohrentz

(56) References cited:
- EP-A1- 1 813 413
- EP-A1- 2 633 969
- EP-A1- 2 769 822
- JP-A- 2000 238 110

## Description

### BACKGROUND OF THE INVENTION

### Field of the Invention

### Description of Related Art

The present invention relates to an injection molding machine.

An injection molding machine has an injection unit which includes a nozzle that injects a molding material into a mold unit, a moving unit which advances and retracts the injection unit with respect to the mold unit, a controller which controls the moving unit, and the like. The moving unit presses the nozzle of the injection unit against the mold unit, thereby preventing the leakage of the molding material from between the nozzle and the mold unit. A pressure which presses the nozzle of the injection unit against the mold unit is called a nozzle contact pressure.

The moving unit has a hydraulic pump, a drive source which activates the hydraulic pump, a hydraulic actuator which includes a pressure chamber which generates the nozzle contact pressure using a hydraulic pressure of a working fluid which is supplied from the hydraulic pump, and a control valve which controls the flow of the working fluid between the pressure chamber and the hydraulic pump (refer to, for example, Japanese Unexamined Patent Application Publication No. 2006-62244).

European Patent Application EP 2 633 969 A1 discloses an injection molding machine with a moving unit which advances and retracts an injection unit with respect to a mold unit. The moving unit includes a hydraulic pump with a motor, the pump being connected to a pressure chamber of a hydraulic actuator for generating a nozzle contact pressure using a working fluid. A control valve controls the flow of the working fluid, and a pressure detector detects the hydraulic pressure of said working fluid in the pressure chamber. When said hydraulic pressure reaches a set value, the control valve is closed and the pump is stopped. If an increase in hydraulic pressure above the set value should be detected, this is taken as an indication of a thrust acting on the nozzle due to an insufficient nozzle contact pressure. A controller may hence increase the set value for the hydraulic
pressure for the next molding cycle.

The controller restricts the flow of the working fluid from the pressure chamber to the hydraulic pump by the control valve, thereby maintaining the nozzle contact pressure after the drive source is brought to be in a stop state.

In the related art, there is a case where the nozzle contact pressure varies in a state where the flow of the working fluid from the pressure chamber to the hydraulic pump has been restricted by the control valve. The variation of the nozzle contact pressure is caused by, for example, temperature variation, vibration, or the like of the injection molding machine or the mold unit.

### SUMMARY OF THE INVENTION

The present invention has been made in view of the above problem and has a main object to provide an injection molding machine which copes with variation in nozzle contact pressure.

In order to solve the above problem, according to an aspect of the present invention, there is provided an injection molding machine according to claim 1 including: an injection unit which injects a molding material into a mold unit; a moving unit which advances and retracts the injection unit with respect to the mold unit; and a controller which controls the moving unit, in which the moving unit includes a hydraulic pump, a drive source which activates the hydraulic pump, a hydraulic actuator which includes a pressure chamber which generates a nozzle contact pressure using a hydraulic pressure of a working fluid which is supplied from the hydraulic pump, and a control valve which controls a flow of the working fluid between the pressure chamber and the hydraulic pump, a pressure detector which detects the nozzle contact pressure is provided, and the controller performs monitoring of the nozzle contact pressure with the pressure detector in a state where restriction of the flow of the working fluid from the pressure chamber to the hydraulic pump has been implemented by the control valve. Further, there is provided an injection molding method according to claim 5.

### BRIEF DESCRIPTION OF THE DRAWINGS

Fig. 1 is a diagram showing an injection molding machine according to an embodiment of the present invention.
Fig. 2 is a flowchart showing the processing of a controller according to the embodiment of the present invention.
Fig. 3 is a flowchart showing another processing of the controller according to the embodiment of the present invention.

### DETAILED DESCRIPTION OF THE INVENTION

Hereinafter, a mode for carrying out the present invention will be described with reference to the drawings. However, in each of the drawings, an identical or a corresponding configuration is denoted by an identical or a corresponding reference numeral and a description thereof is omitted.

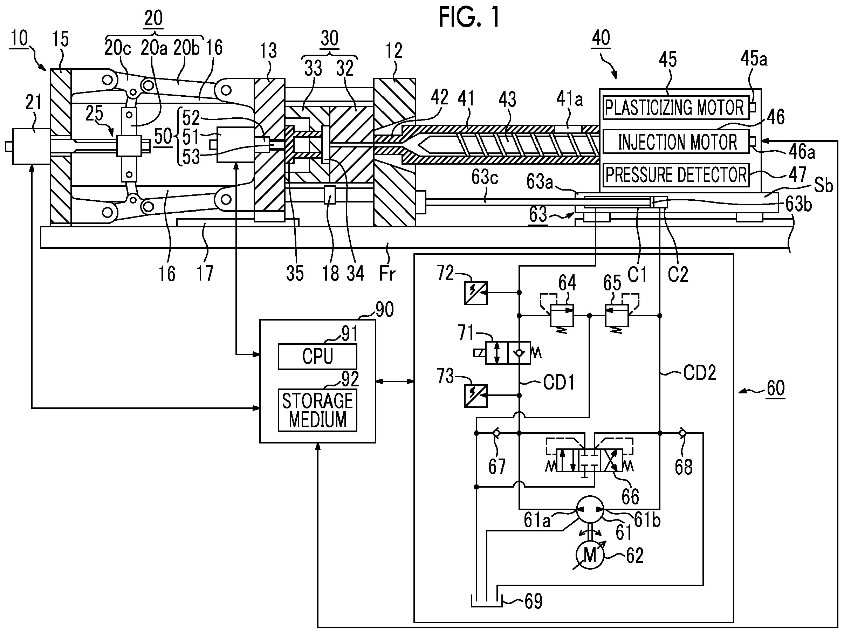

Fig. 1 is a diagram showing an injection molding machine according to an embodiment of the present invention. The injection molding machine shown in Fig. 1 has a frame Fr, a mold clamping unit 10, an injection unit 40, an ejector unit 50, a moving unit 60, a controller 90, and the like.

First, the mold clamping unit 10 will be described. In the description of the mold clamping unit 10, a direction of movement (the rightward direction in Fig. 1) of a movable platen 13 when performing mold closing will be described as being forward and a direction of movement (the leftward direction in Fig. 1) of the movable platen 13 when performing mold opening as being backward.

The mold clamping unit 10 performs mold closing, mold clamping, and mold opening of a mold unit 30. The mold clamping unit 10 has a stationary platen 12, the movable platen 13, a rear platen 15, a tiebar 16, a toggle mechanism 20, a mold clamping motor 21, and a motion conversion mechanism 25.

The stationary platen 12 is fixed to the frame Fr. A stationary mold 32 is mounted on the surface facing the movable platen 13 in the stationary platen 12.

The movable platen 13 is made so as to be able to move along a guide (for example, a guide rail) 17 which is laid on the frame Fr, and is made so as to be able to advance and retract with respect to the stationary platen 12. A movable mold 33 is mounted on the surface facing the stationary platen 12 in the movable platen 13.

The movable platen 13 advances and retracts with respect to the stationary platen 12, whereby the mold closing, the mold clamping, and the mold opening are performed. The mold unit 30 is configured with the stationary mold 32 and the movable mold 33.

The rear platen 15 is connected to the stationary platen 12 with a distance therebetween and is placed on the frame Fr so as to be able to move in a mold opening and closing direction. In addition, the rear platen 15 may be made so as to be able to move along a guide which is laid on the frame Fr. The guide of the rear platen 15 may be shared by the guide 17 of the movable platen 13.

In addition, in this embodiment, a configuration is made such that the stationary platen 12 is fixed to the frame Fr and the rear platen 15 is movable in the mold opening and closing direction with respect to the frame Fr. However, a configuration may be made such that the rear platen 15 is fixed to the frame Fr and the stationary platen 12 is movable in the mold opening and closing direction with respect to the frame Fr.

The tie bar 16 connects the stationary platen 12 and the rear platen 15 with a distance therebetween. A plurality of tie bars 16 may be used. The respective tie bars 16 are made so as to be parallel to each other in the mold opening and closing direction, and extend according to a mold clamping force. Arnold clamping force detector 18 is provided in at least one of the tie bars 16. The mold clamping force detector 18 may be a strain gauge type and detects the strain of the tie bar 16, thereby detecting the mold clamping force.

In addition, the mold clamping force detector 18 is not limited to the strain gauge type and may be a piezoelectric type, a capacitive type, a hydraulic type, an electromagnetic type, or the like, and a mounting position thereof is also not limited to the tie bar 16.

The toggle mechanism 20 is disposed between the movable platen 13 and the rear platen 15. The toggle mechanism 20 is configured with a cross head 20a, a plurality of links 20b and 20c, and the like. The link 20b on one side is oscillatablymounted on the movable platen 13, and the link 20c on the other side is oscillatably mounted on the rear platen 15. The links 20b and 20c are connected to each other by a pin or the like so as to be able to be bent and stretched. The plurality of links 20b and 20c are bent and stretched by advancing and retracting the cross head 20a, whereby the movable platen 13 advances and retracts with respect to the rear platen 15.

The mold clamping motor 21 is mounted on the rear platen 15 and advances and retracts the cross head 20a, thereby advancing and retracting the movable platen 13. The motion conversion mechanism 25 for converting the rotation motion of the mold clamping motor 21 into linear motion and transmitting the linear motion to the cross head 20a is provided between the mold clamping motor 21 and the cross head 20a. The motion conversion mechanism 25 is configured with, for example, a ball screw mechanism.

An operation of the mold clamping unit 10 is controlled by the controller 90. The controller 90 controls a mold closing process, a mold clamping process, a mold opening process, and the like.

In the mold closing process, the movable mold 33 is brought into contact with the stationary mold 32 by advancing the movable platen 13 by driving the mold clamping motor 21.

In the mold clamping process, the mold clamping force is generated by further driving the mold clamping motor 21. At the time of the mold clamping, a cavity 34 is formed between the movable mold 33 and the stationary mold 32, and the cavity 34 is filled with a liquid molding material. The molding material in the cavity 34 is solidified, thereby becoming a molding product.

In the mold opening process, the movable mold 33 is separated from the stationary mold 32 by retracting the movable platen 13 by driving the mold clamping motor 21.

In addition, the mold clamping unit 10 of this embodiment has the mold clamping motor 21 as a drive source. However, the mold clamping unit 10 may have a hydraulic cylinder, instead of the mold clamping motor 21. Further, the mold clamping unit 10 may have a linear motor for the mold opening and closing and have an electromagnet for the mold clamping.

Next, the ejector unit 50 will be described. In the description of the ejector unit 50, similar to the description of the mold clamping unit 10, a direction of movement (the rightward direction in Fig. 1) of the movable platen 13 when performing the mold closing will be described as being forward and a direction of movement (the leftward direction in Fig. 1) of the movable platen 13 when performing the mold opening as being backward.

The ejector unit 50 pushes the molding product out from the mold unit 30 after the molding opening. The ejector unit 50 has, for example, an ejector motor 51, a motion conversion mechanism 52, and an ejector rod 53.

The ejector motor 51 is mounted on the back surface of the movable platen 13.

The motion conversion mechanism 52 converts the rotation motion of the ejector motor 51 into the linear motion of the ejector rod 53. The motion conversion mechanism 52 is configured with, for example, a ball screw mechanism or the like.

The ejector rod 53 is made so as to be able to advance and retract in a through-hole of the movable platen 13. A front end portion of the ejector rod 53 comes into contact with a movable member 35 which is disposed in the movable mold 33 so as to be able to advance and retract.

An operation of the ejector unit 50 is controlled by the controller 90. The controller 90 controls a pushing-out process or the like.

In the pushing-out process, the ejector motor 51 is driven, thereby advancing the ejector rod 53, whereby the movable member 35 advances, thereby pushing the molding product out. Thereafter, the ejector motor 51 is driven, thereby retracting the ejector rod 53, whereby the movable member 35 retracts to the original position.

Next, the injection unit 40 will be described. In the description of the injection unit 40, unlike the description of the mold clamping unit 10, a direction of movement (the leftward direction in Fig. 1) of a screw 43 when performing filling will be described as being forward and a direction of movement (the rightward direction in Fig. 1) of the screw 43 when performing plasticizing as being backward.

The injection unit 40 is installed on a slide base Sb capable of advancing and retracting with respect to the frame Fr and is made so as to be able to advance and retract with respect to the mold unit 30. The injection unit 40 comes into contact with the mold unit 30 and fills the mold unit 30 with a molding material. The injection unit 40 has, for example, a cylinder 41, a nozzle 42, the screw 43, aplasticizingmotor 45, an injection motor 46, and a pressure detector 47.

The cylinder 41 heats the molding material fed from a feed port 41a. The feed port 41a is formed in a rear portion of the cylinder 41. A heat source such as a heater is provided in the outer periphery of the cylinder 41.

The nozzle 42 is provided at a front end portion of the cylinder 41 and pressed against the mold unit 30.

The screw 43 is disposed so as to be rotatable and be able to advance and retract in the cylinder 41.

The plasticizing motor 45 rotates the screw 43, thereby sending the molding material forward along a helical groove of the screw 43. The molding material is gradually melted by heat from the cylinder 41 while being sent forward. The screw 43 retracts as a liquid molding material is sent to the front of the screw 43 and accumulated in a front portion of the cylinder 41.

The injection motor 46 is a driving unit which advances and retracts the screw 43. The injection motor 46 advances the screw 43, thereby making the cavity 34 of the mold unit 30 be filled with the liquid molding material accumulated in front of the screw 43. Thereafter, the injection motor 46 presses the screw 43 forward, thereby applying a pressure to the molding material in the cavity 34. A molding material can be replenished when there is a shortage thereof. A motion conversion mechanism for converting the rotation motion of the injection motor 46 into the linear motion of the screw 43 is provided between the injection motor 46 and the screw 43.

The pressure detector 47 is disposed, for example, between the injection motor 46 and the screw 43 and detects a pressure which the screw 43 receives from the molding material, a back pressure against the screw 43, or the like. The pressure which the screw 43 receives from the molding material corresponds to a pressure acting on the molding material from the screw 43.

An operation of the injection unit 40 is controlled by the controller 90. The controller 90 controls a filling process, a hold pressure process, a plasticizing process, and the like.

In the filling process, the injection motor 46 is driven, thereby advancing the screw 43 at a set speed and thus making the mold unit 30 be filled with the liquid molding material accumulated in front of the screw 43. The position or the speed of the screw 43 is detected by, for example, an encoder 46a of the injection motor 46. If the position of the screw 43 reaches a predetermined position, switching (so-called V/P switching) from the filling process to the hold pressure process is performed.

In addition, a configuration may be made in which after the position of the screw 43 reaches a predetermined position in the filling process, the screw 43 is temporarily stopped at the predetermined position and thereafter, the V/P switching is performed. Immediately before the V/P switching, instead of stopping of the screw 43, very slow speed advance or very slow speed retraction of the screw 43 may be performed.

In the hold pressure process, the injection motor 46 is driven, thereby pressing the screw 43 forward at a set pressure and thus applying a pressure to the molding material in the mold unit 30. A molding material can be replenished when there is a shortage thereof. The pressure of the molding material is detected by, for example, the pressure detector 47. After the hold pressure process, a cooling process is started. In the cooling process, solidification of the molding material in the cavity 34 is performed. The plasticizing process maybe performed during the cooling process.

In the plasticizing process, the plasticizing motor 45 is driven, thereby rotating the screw 43 at a set rotational frequency and thus sending the molding material forward along the helical groove of the screw 43. Accordingly, the molding material is gradually melted. The screw 43 retracts as a liquid molding material is sent to the front of the screw 43 and accumulated in the front portion of the cylinder 41. The rotational frequency of the screw 43 is detected by, for example, an encoder 45a of the plasticizing motor 45.

In the plasticizing process, in order to restrict the rapid retraction of the screw 43, set back pressure may be applied to the screw 43 by driving the injection motor 46. The back pressure against the screw 43 is detected by, for example, the pressure detector 47. If the screw 43 retracts to a predetermined position and a predetermined amount of molding material is accumulated in front of the screw 43, the plasticizing process is ended.

In addition, the injection unit 40 of this embodiment is an inline screw type. However, the injection unit 40 may be a pre-plasticizing type or the like. In an injection unit of a pre-plasticizing type, a molding material melted in a plasticizing cylinder is fed into an injection cylinder and the molding material is then injected from the injection cylinder into a mold unit.

Next, the moving unit 60 will be described. In the description of the moving unit 60, similar to the description of the injection unit 40, a direction of movement (the leftward direction in Fig. 1) of the screw 43 when performing the filling will be described as being forward and a direction of movement (the rightward direction in Fig. 1) of the screw 43 when performing the plasticizing as being backward.

The moving unit 60 advances and retracts the injection unit 40 with respect to the mold unit 30. Further, the moving unit 60 presses the nozzle 42 against the mold unit 30, thereby generating a nozzle contact pressure. The moving unit 60 includes a hydraulic pump 61, a motor 62 as a drive source, a hydraulic cylinder 63 as a hydraulic actuator, a first relief valve 64, a second relief valve 65, a flushing valve 66, a first check valve 67, a second check valve 68, a tank 69, an electromagnetic switching valve 71, a first pressure detector 72, asecondpressure detector 73, and the like.

The hydraulic pump 61 has a first port 61a and a second port 61b. The hydraulic pump 61 is a bidirectional rotatable pump and generates a hydraulic pressure by sucking a working fluid (for example, oil) from one of the first port 61a and the second port 61b and discharging the working fluid from the other by switching the rotation direction of the motor 62. In addition, the hydraulic pump 61 can also discharge the working fluid from either of the first port 61a and the second port 61b by sucking the working fluid from the tank 69.

The motor 62 activates the hydraulic pump 61. The motor 62 drives the hydraulic pump 61 in a rotation direction and with a rotating torque corresponding to a control signal from the controller 90. The motor 62 may be an electric motor and may also be an electric servo motor.

The hydraulic cylinder 63 has a cylinder main body 63a, a piston 63b, and a piston rod 63c. The cylinder main body 63a is fixed to the injection unit 40. The piston 63b partitions the inside of the cylinder main body 63a into a front chamber C1 as a first chamber and a rear chamber C2 as a second chamber. The piston rod 63c is fixed to the stationary platen 12. Since the piston rod 63c passes through the front chamber C1, the cross-sectional area of the front chamber C1 is smaller than the cross-sectional area of the rear chamber C2.

The front chamber C1 of the hydraulic cylinder 63 is connected to the first port 61a of the hydraulic pump 61 through a first flow path CD1. The working fluid discharged from the first port 61a is supplied to the front chamber C1 through the first flow path CD1, whereby the injection unit 40 is pushed forward. The injection unit 40 is advanced, whereby the nozzle 42 is pressed against the stationary mold 32. The front chamber C1 functions as a pressure chamber which generates the nozzle contact pressure of the nozzle 42 using the pressure of the working fluid which is supplied from the hydraulic pump 61.

On the other hand, the rear chamber C2 of the hydraulic cylinder 63 is connected to the second port 61b of the hydraulic pump 61 through a second flow path CD2. The working fluid discharged from the second port 61b is supplied to the rear chamber C2 of the hydraulic cylinder 63 through the second flow path CD2, whereby the injection unit 40 is pushed backward. The injection unit 40 is retracted, whereby the nozzle 42 is separated from the stationary mold 32.

In a case where the pressure in the first flow path CD1 exceeds a setting value, the first relief valve 64 is opened, thereby returning an excess working fluid in the first flow path CD1 to the tank 69 and thus maintaining the pressure in the first flow path CD1 at a pressure less than or equal to the setting value.

In a case where the pressure in the second flow path CD2 exceeds a setting value, the second relief valve 65 is opened, thereby returning an excess working fluid in the second flow path CD2 to the tank 69 and thus maintaining the pressure in the second flow path CD2 at a pressure less than or equal to the setting value.

The flushing valve 66 is a valve which adjusts an excess or deficiency in the circulation amount of the working fluid due to a difference between the cross-sectional area of the front chamber C1 and the cross-sectional area of the rear chamber C2, and is configured with, for example, a three-position and four-port spool valve, as shown in Fig. 1.

In a case where the pressure in the first flow path CD1 is lower than the pressure in the tank 69, the first check valve 67 is opened, thereby supplying the working fluid from the tank 69 to the first flow path CD1.

In a case where the pressure in the second flow path CD2 is lower than the pressure in the tank 69, the second check valve 68 is opened, thereby supplying the working fluid from the tank 69 to the second flow path CD2.

The electromagnetic switching valve 71 is a control valve which controls the flow of the working fluid between the front chamber C1 of the hydraulic cylinder 63 and the first port 61a of the hydraulic pump 61. The electromagnetic switching valve 71 is provided in the middle of the first flow path CD1, for example, and controls the flow of the working fluid in the first flow path CD1.

The electromagnetic switching valve 71 is configured with, for example, a two-position and two-port spool valve, as shown in Fig. 1. In a case where the spool valve is at a first position (the position on the left side in Fig. 1), the flow in both directions between the front chamber C1 and the first port 61a is permitted. On the other hand, in a case where the spool valve is at a second position (the position on the right side in Fig. 1), the flow from the front chamber C1 to the first port 61a is restricted. In this case, the flow from the first port 61a to the front chamber C1 is not restricted. However, the flow may be restricted.

The first pressure detector 72 detects the hydraulic pressure in the front chamber C1. Since the nozzle contact pressure is generated by the hydraulic pressure in the front chamber C1, the nozzle contact pressure can be detected by using the first pressure detector 72. The first pressure detector 72 is provided in the middle of the first flow path CD1, for example, and is provided at a position on the front chamber C1 side on the basis of the electromagnetic switching valve 71. The nozzle contact pressure can be detected regardless of the state of the electromagnetic switching valve 71.

The second pressure detector 73 is provided in the middle of the first flow path CD1 and provided at a position on the first port 61a side on the basis of the electromagnetic switching valve 71. The second pressure detector 73 detects the hydraulic pressure between the electromagnetic switching valve 71 and the first port 61a. In a case of being in a state where the electromagnetic switching valve 71 permits the flow in both directions between the first port 61a and the front chamber C1, the hydraulic pressure between the first port 61a and the electromagnetic switching valve 71 and the hydraulic pressure between the electromagnetic switching valve 71 and the front chamber C1 are the same. Accordingly, in the case of this state, the nozzle contact pressure can be detected by using the second pressure detector 73.

In addition, in this embodiment, the nozzle contact pressure is detected by using a pressure detector which is provided in the middle of the first flow path CD1. However, the nozzle contact pressure may be detected by using a load cell or the like which is provided in the nozzle 42, for example. That is, a pressure detector which detects the nozzle contact pressure maybe provided in either of the moving unit 60 and the injection unit 40.

Next, the controller 90 will be described. The controller 90 has a central processing unit (CPU) 91 and a storage medium 92 such as a memory. The controller 90 controls the mold clamping unit 10, the injection unit 40, the ejector unit 50, and the moving unit 60 by executing a program stored in the storage medium 92 in the CPU 91.

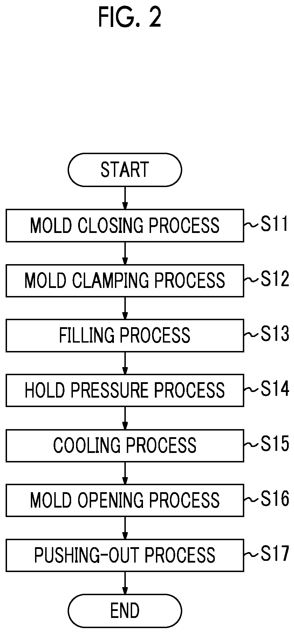

Fig. 2 is a flowchart showing the processing of the controller according to the embodiment of the present invention. The controller 90 controls the mold clamping unit 10, the injection unit 40, and the ejector unit 50, thereby performing the processing shown in Fig. 2.

The controller 90 performs a series of processes such as a mold closing process S11, a mold clamping process S12, a filling process S13, a hold pressure process S14, a cooling process S15, a mold opening process S16, and a pushing-out process S17, thereby manufacturing a molding product. The controller 90 repeatedly performs these series of processes, thereby performs a cycle operation to repeatedly manufacture a molding product. For the shortening of a molding cycle, a plasticizing process may be performed during the cooling process S15.

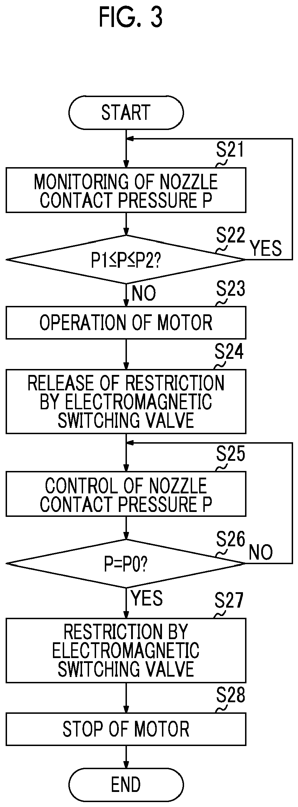

Fig. 3 is a flowchart showing another processing of the controller according to the embodiment of the present invention. The controller 90 controls the moving unit 60, thereby performing the processing shown in Fig. 3.

Before the start of the processing shown in Fig. 3, the controller 90 controls the motor 62 such that nozzle contact pressure P reaches a setting value P0, and performs the restriction of the flow of the working fluid from the front chamber C1 to the first port 61a by the electromagnetic switching valve 71 in that state. Thereafter, the controller 90 makes the motor 62 be in a stop state or an idling state, thereby stopping the supply of the working fluid from the first port 61a to the front chamber C1. These processes are performed, for example, after the start of the cycle operation and before the first (first shot) filling process S13. It is possible to prevent the leakage of the molding material from between the nozzle 42 and the stationary mold 32 in the filling process S13 and the like.

In this state, the controller 90 starts the processing shown in Fig. 3. First, in Step S21 of Fig. 3, the controller 90 monitors the nozzle contact pressure P by using the first pressure detector 72. The monitoring is performed in, for example, the filling process S13 and the hold pressure process S14. That is, the monitoring may be performed during the molding of the molding material in the mold unit 30.

Subsequently, in Step S22, the controller 90 checks whether or not the nozzle contact pressure P is within a predetermined range (P1≤P≤P2). In a case where the nozzle contact pressure P is within the predetermined range (Step S22, YES), the controller 90 returns to Step S21 and repeatedly performs the processing of Step S21 and the subsequent processing. On the other hand, in a case where the nozzle contact pressure P is outside of the predetermined range (Step S22, NO), the controller 90 proceeds to Step S23.

In Step S23, the controller 90 activates the motor 62, thereby increasing the hydraulic pressure between the first port 61a and the electromagnetic switching valve 71. For example, the controller 90 may increase the hydraulic pressure between the first port 61a and the electromagnetic switching valve 71 to hydraulic pressure equivalent to the setting value P0 of the nozzle contact pressure P. Time for the nozzle contact pressure P to reach the setting value P0 in Step S25 which will be described later can be shortened.

In addition, for the shortening of a molding cycle, the processing of Step S23 and the subsequent processing are performed during any of the processes. Preferably, the processing of Step S23 and the subsequent processing may be performed during a predetermined process (for example, the cooling process S15, the mold opening process S16, the pushing-out process S17, the mold closing process S11, or the like) other than the filling process S13 and the hold pressure process S14.

Subsequently, in Step S24, the controller 90 performs the switching of the electromagnetic switching valve 71, thereby performing release of the restriction by the electromagnetic switching valve 71 and permitting the flow in both directions between the first port 61a and the front chamber C1.

Thereafter, in Step S25, the controller 90 performs control of the nozzle contact pressure P. The control maybe, for example, feedback control, and the motor 62 is controlled such that the nozzle contact pressure P reaches the setting value P0. In the control, for example, the detection result of the first pressure detector 72, the detection result of the second pressure detector 73, or the like is used.

Subsequently, in Step S26, the controller 90 checks whether or not the nozzle contact pressure P is the setting value P0. In a case where the nozzle contact pressure P is not the setting value P0 (Step S26, NO), the controller 90 returns to Step S25 and continues with the processing of Step S25 and the subsequent processing. On the other hand, in a case where the nozzle contact pressure P is the setting value P0 (Step S26, YES), the controller 90 proceeds to Step S27. In addition, if the nozzle contact pressure P is within an allowable range with the setting value P0 as a reference, the controller 90 may proceed to Step S27.

In Step S27, the controller 90 performs the switching of the electromagnetic switching valve 71, thereby performing the restriction by the electromagnetic switching valve 71 again. Subsequently, in Step S28, the controller 90 stops the motor 62 and ends the current processing. In addition, in Step S28, instead of making the motor 62 being in a stop state, the motor 62 may be brought to be in an idling state.

Thereafter, the controller 90 may repeatedly performs the processing of Step S21 and the subsequent processing in Fig. 3 until the completion of the cycle operation.

As described above, according to this embodiment, the controller 90 performs the monitoring of the nozzle contact pressure P by the first pressure detector 72 in a state where the restriction by the electromagnetic switching valve 71 is performed. The controller 90 can cope with the variation of the nozzle contact pressure P, based on the monitoring result. For example, it is possible to perform re-adjustment of the nozzle contact pressure P, output of an alarm, quality control of a molding product, or the like.

Further, if the nozzle contact pressure P being outside of a predetermined range is detected during the monitoring, the controller 90 releases the restriction by the electromagnetic switching valve 71 and controls the nozzle contact pressure P. Accordingly, it is possible to re-adjust the nozzle contact pressure P, and thus it is possible to improve the yield of a molding product.

Further, if the nozzle contact pressure P being outside of a predetermined range is detected during the monitoring, before the releases of the restriction by the electromagnetic switching valve 71, the controller 90 activates the motor 62, thereby increasing the hydraulic pressure between the first port 61a and the electromagnetic switching valve 71. It is possible to suppress a sudden drop in the nozzle contact pressure P due to the release of the restriction, and thus it is possible to prevent the leakage of the molding material from between the nozzle 42 and the stationary mold 32.

Further, if the nozzle contact pressure P being outside of a predetermined range is detected during the monitoring, the controller 90 releases the restriction by the electromagnetic switching valve 71, controls the nozzle contact pressure P, and thereafter, performs the restriction by the electromagnetic switching valve 71 again. Thereafter, in a case where the motor 62 is brought to be in a stop state or an idling state, it is possible to suppress a drop in the nozzle contact pressure P.

Further, the controller 90 performs at least a part of the processing which is performed based on the result of the monitoring, during a predetermined process other than the filling process S13 and the hold pressure process S14. For example, the controller 90 performs at least one processing from the operation of the motor 62 (Step S23) to the stop of the motor 62 (Step S28) during a predetermined process other than the filling process S13 and the hold pressure process S14. Accordingly, it is possible to shorten the molding cycle.

It is preferable that the processing of Steps S23 to S28 is performed during the cooling process S15, in the middle of the mold opening process S16, in the middle of the pushing-out process S17, in the middle of the mold closing process S11, or the like. At the time of the start or the time of the end of the mold opening process S16, the starting or the stopping of the movable platen 13 is performed, and thus vibration easily occurs, and therefore, it is better to avoid the processing of Steps S23 to S28. Also at the time of the start or the time of the end of the pushing-out process S17, or at the time of the start or the time of the end of the mold closing process S11, it is better to avoid the processing of Steps S23 to S28 for the same reason. Immediately before the end of the cooling process S15, the molding material in the mold unit 30 has been almost solidified, and therefore, it is particularly preferable that the processing of Steps S23 to S28 is performed immediately before the end of the cooling process S15.

The embodiment of the injection molding machine has been described above. However, the present invention is not limited to the above-described embodiment, and various modifications and improvements can be made within the scope of the concept of the present invention stated in the appended claims.

For example, the controller 90 may output an alarm in a case where the nozzle contact pressure P is outside of the predetermined range in Step S22 of Fig. 3. Further, the controller may determine that the molding product is a non-defective product, in a case where the nozzle contact pressure P is within the predetermined range in Step S22 of Fig. 3, and determine that the molding product is a defective product, in a case where the nozzle contact pressure P is outside of the predetermined range in Step S22 of Fig. 3.

Further, the controller 90 makes the setting value P0 of the nozzle contact pressure P constant in the processing of Fig. 3. However, the setting value P0 may be changed. It is favorable that the controller 90 performs the monitoring of the nozzle contact pressure P in a state where the restriction by the electromagnetic switching valve 71 has been performed.

## Claims

1. An injection molding machine comprising:
an injection unit (40) which injects a molding material into a mold unit (30);
a moving unit (60) which advances and retracts the injection unit (40) with respect to the mold unit (30); and
a controller (90) which controls the moving unit (60),
wherein the moving unit (60) includes a hydraulic pump (61), a drive source (62) which activates the hydraulic pump (61), a hydraulic actuator (63) which includes a pressure chamber (C1) which generates a nozzle contact pressure using a hydraulic pressure of a working fluid which is supplied from the hydraulic pump (61), and a control valve (71) which controls a flow of the working fluid between the pressure chamber (C1) and the hydraulic pump (61),
a pressure detector (72) which detects the nozzle contact pressure,
wherein the controller (90) is adapted to perform monitoring of the nozzle contact pressure with the pressure detector (72) in a state where restriction, of the flow of the working fluid from the pressure chamber (C1) to the hydraulic pump (61) has been implemented by the control valve (71), **characterized in that**
the controller (90) is further adapted to release, if the nozzle contact pressure being outside of a predetermined range is detected during the monitoring, the restriction by the control valve (71) and to control the nozzle contact pressure.

2. The injection molding machine according to Claim 1, wherein the controller (90) is further adapted to activate the drive source (62) if the nozzle contact pressure being outside of a predetermined range is detected during the monitoring, before release of the restriction by the control valve (71), thereby increasing a hydraulic pressure between the hydraulic pump (61) and the control valve (71).

3. The injection molding machine according to any one of Claims 1 or 2, wherein the controller (90) is further adapted to release, if the nozzle contact pressure being outside of a predetermined range is detected during the monitoring, the restriction by the control valve (71), to control the nozzle contact pressure, and thereafter, to implement the restriction using the control valve (71) again.

4. The injection molding machine according to any one of Claims 1 to 3, wherein the controller (90) is further adapted to perform at least a part of processing which is performed based on a result of the monitoring, during a predetermined process other than a filling process and a hold pressure process.

5. A method for operating an injection molding machine comprising:
an injection unit (40) which injects a molding material into a mold unit (30);
amovingunit (60) which advances and retracts the injection unit (40) with respect to the mold unit (30); and
a controller (90) which controls the moving unit (60),
wherein the moving unit (60) includes a hydraulic pump (61), a drive source (62) which activates the hydraulic pump (61), a hydraulic actuator (63) which includes a pressure chamber (C1) which generates a nozzle contact pressure using a hydraulic pressure of a working fluid which is supplied from the hydraulic pump (61), and a control valve (71) which controls a flow of the working fluid between the pressure chamber (C1) and the hydraulic pump (61),
a pressure detector (72) which detects the nozzle contact pressure,
wherein the controller (90) performs monitoring of the nozzle contact pressure with the pressure detector (72) in a state where restriction of the flow of the working fluid from the pressure chamber (C1) to the hydraulic pump (61) has been implemented by the control valve (71),
**characterized in that**
the controller (90) releases, if the nozzle contact pressure being outside of a predetermined range is detected during the monitoring, the restriction by the control valve (71) and controls the nozzle contact pressure.

## Patentansprüche

1. Spritzgießmaschine, die umfasst:
eine Einspritzeinheit (40), die ein Gießmaterial in eine Gießeinheit (30) spritzt;
eine Bewegungseinheit (60), die die Einspritzeinheit (40) in Bezug auf die Gießeinheit (30) vorschiebt und zurückzieht; und
eine Steuereinheit (90), die die Bewegungseinheit (60) steuert,
wobei die Bewegungseinheit (60) eine Hydraulikpumpe (61), eine Antriebsquelle (62), die die Hydraulikpumpe (61) aktiviert, einen hydraulischen Aktuator (63), der eine Druckkammer (C1) enthält, die unter Verwendung eines Hydraulikdrucks eines Arbeitsfluids, das aus der Hydraulikpumpe (61) zugeführt wird, einen Düsenkontaktdruck erzeugt, und ein Steuerventil (71), das einen Fluss des Arbeitsfluids zwischen der Druckkammer (C1) und der Hydraulikpumpe (61) steuert, umfasst,
einen Druckdetektor (72), der den Düsenkontaktdruck detektiert,
wobei die Steuereinheit (90) ausgelegt ist, die Überwachung des Düsenkontaktdrucks mit dem Druckdetektor (72) in einem Zustand auszuführen, in dem die Begrenzung des Flusses des Arbeitsfluids aus der Druckkammer (C1) zu der Hydraulikpumpe (61) durch das Steuerventil (71) implementiert worden ist, **dadurch gekennzeichnet, dass**
die Steuereinheit (90) ferner ausgelegt ist, dann, wenn während der Überwachung detektiert wird, dass der Düsenkontaktdruck außerhalb eines vorbestimmten Bereichs ist, die Begrenzung durch das Steuerventil (71) aufzuheben und den Düsenkontaktdruck zu steuern.

2. Spritzgießmaschine nach Anspruch 1, wobei die Steuereinheit (90) ferner ausgelegt ist, dann, wenn während der Überwachung detektiert wird, dass der Düsenkontaktdruck außerhalb eines vorbestimmten Bereichs ist, die Antriebsquelle (62) vor dem Aufheben der Begrenzung durch das Steuerventil (71) zu aktivieren und dadurch einen Hydraulikdruck zwischen der Hydraulikpumpe (61) und dem Steuerventil (71) zu erhöhen.

3. Spritzgießmaschine nach einem der Ansprüche 1 oder 2, wobei die Steuereinheit (90) ferner ausgelegt ist, dann, wenn während der Überwachung detektiert wird, dass der Düsenkontaktdruck außerhalb eines vorbestimmten Bereichs ist, die Begrenzung durch das Steuerventil (71) aufzuheben, um den Steuerkontaktdruck zu steuern, und danach die Begrenzung unter Verwendung des Steuerventils (71) wieder zu implementieren.

4. Spritzgießmaschine nach einem der Ansprüche 1 bis 3, wobei die Steuereinheit (90) ferner ausgelegt ist, wenigstens einen Teil der Verarbeitung, die basierend auf einem Ergebnis der Überwachung ausgeführt wird, während eines vorbestimmten Prozesses, der kein Füllprozess und kein Druckhalteprozess ist, auszuführen.

5. Verfahren zum Betreiben einer Spritzgießmaschine, das umfasst:
eine Einspritzeinheit (40), die ein Gießmaterial in eine Gießeinheit (30) spritzt;
eine Bewegungseinheit (60), die die Einspritzeinheit (40) in Bezug auf die Gießeinheit (30) vorschiebt und zurückzieht; und
eine Steuereinheit (90), die die Bewegungseinheit (60) steuert,
wobei die Bewegungseinheit (60) eine Hydraulikpumpe (61), eine Antriebsquelle (62), die die Hydraulikpumpe (61) aktiviert, einen hydraulischen Aktuator (63), der eine Druckkammer (C1) enthält, die unter Verwendung eines Hydraulikdrucks eines Arbeitsfluids, das aus der Hydraulikpumpe (61) zugeführt wird, einen Düsenkontaktdruck erzeugt, und ein Steuerventil (71), das einen Fluss des Arbeitsfluids zwischen der Druckkammer (C1) und der Hydraulikpumpe (61) steuert, enthält,
einen Druckdetektor (72), der den Düsenkontaktdruck detektiert,
wobei die Steuereinheit (90) die Überwachung des Düsenkontaktdrucks mit dem Druckdetektor (72) in einem Zustand ausführt, in dem die Begrenzung des Flusses des Arbeitsfluids aus der Druckkammer (C1) zu der Hydraulikpumpe (61) durch das Steuerventil (71) implementiert worden ist,
**dadurch gekennzeichnet, dass**
die Steuereinheit (90) dann, wenn während der Überwachung detektiert wird, dass der Düsenkontaktdruck außerhalb eines vorbestimmten Bereichs ist, die Begrenzung durch das Steuerventil (71) aufhebt und den Düsenkontaktdruck steuert.

## Revendications

1. Machine de moulage par injection comprenant :
une unité d'injection (40) qui injecte un matériau de moulage dans une unité de moule (30) ;
une unité de déplacement (60) qui fait avancer et rétracte l'unité d'injection (40) par rapport à l'unité de moule (30) ; et
un contrôleur (90) qui contrôle l'unité de déplacement (60),
dans laquelle l'unité de déplacement (60) comprend une pompe hydraulique (61), une source d'entraînement (62) qui active la pompe hydraulique (61), un actionneur hydraulique (63) qui comprend une chambre de pression (C1) qui génère une pression de contact de buse à l'aide d'une pression hydraulique d'un fluide de fonctionnement qui est fourni par la pompe hydraulique (61), et une soupape de commande (71) qui régule un débit du fluide de fonctionnement entre la chambre de pression (C1) et la pompe hydraulique (61),
un détecteur de pression (72) qui détecte la pression de contact de buse,
dans lequel le contrôleur (90) est adapté pour surveiller la pression de contact de buse avec le détecteur de pression (72) lorsqu'une restriction du débit du fluide de fonctionnement entre la chambre de pression (C1) et la pompe hydraulique (61) a été mise en oeuvre par la soupape de commande (71),
**caractérisée en ce que**
le contrôleur (90) est en outre adapté pour lever, si la pression de contact de buse qui se trouve en-dehors d'une plage prédéterminée est détectée pendant la surveillance, la restriction à l'aide de la soupape de commande (71) et pour contrôler la pression de contact de buse.

2. Machine de moulage par injection selon la revendication 1, dans laquelle
le contrôleur (90) est en outre adapté pour active la source d'entraînement (62) si la pression de contact de buse qui se trouve en-dehors d'une plage prédéterminée est détectée pendant la surveillance, avant la levée de la restriction par la soupape de commande (71), afin d'augmenter une pression hydraulique entre la pompe hydraulique (61) et la soupape de commande (71).

3. Machine de moulage par injection selon l'une quelconque des revendications 1 ou 2, dans laquelle le contrôleur (90) est en outre adapté pour lever, si la pression de contact de buse qui se trouve en-dehors d'une plage prédéterminée est détectée pendant la surveillance, la restriction par la soupape de commande (71), pour contrôler la pression de contact de buse, et, ensuite, pour mettre en oeuvre la restriction en utilisant à nouveau la soupape de commande (71).

4. Machine de moulage par injection selon l'une quelconque des revendications 1 à 3, dans laquelle le contrôleur (90) est en outre adapté pour exécuter au moins une partie d'un traitement qui est exécuté sur la base d'un résultat de la surveillance, pendant un processus prédéterminé autre qu'un processus de remplissage et un processus de maintien de pression.

5. Procédé de fonctionnement d'une machine de moulage par injection comprenant :
une unité d'injection (40) qui injecte un matériau de moulage dans une unité de moule (30) ;
une unité de déplacement (60) qui fait avancer et rétracte l'unité d'injection (40) par rapport à l'unité de moule (30) ; et
un contrôleur (90) qui contrôle l'unité de déplacement (60),
dans laquelle l'unité de déplacement (60) comprend une pompe hydraulique (61), une source d'entraînement (62) qui active la pompe hydraulique (61), un actionneur hydraulique (63) qui comprend une chambre de pression (C1) qui génère une pression de contact de buse en utilisant une pression hydraulique d'un fluide de fonctionnement qui est fourni par la pompe hydraulique (61), et une soupape de commande (71) qui contrôle un débit du fluide de fonctionnement entre la chambre de pression (C1) et la pompe hydraulique (61),
un détecteur de pression (72) qui détecte la pression de contact de buse,
dans lequel le contrôleur (90) surveille la pression de contact de buse avec le détecteur de pression (72) lorsqu'une restriction du débit du fluide de fonctionnement entre la chambre de pression (C1) et la pompe hydraulique (61) a été mise en oeuvre par la soupape de commande (71),
**caractérisée en ce que**
le contrôleur (90) lève, si la pression de contact de buse qui se trouve en-dehors d'une plage prédéterminée est détectée pendant la surveillance, la restriction par la soupape de commande (71) et contrôle la pression de contact de buse.
